# FASCICULE DE BREVET EUROPEEN

(11) **EP 3 901 458 B1**
(45) Date de publication et mention de la délivrance du brevet: **19.07.2023**
(21) Numéro de dépôt: 21155691.5
(22) Date de dépôt: 08.02.2021
(51) Int. Cl.: F04B 15/08, F04B 37/20, F04B 39/00, F04B 39/06, F04B 53/14

(54) **APPAREIL DE COMPRESSION ET STATION DE REMPLISSAGE COMPRENANT UN TEL APPAREIL**
KOMPRESSIONSVORRICHTUNG UND FÜLLSTATION MIT EINER SOLCHEN VORRICHTUNG
COMPRESSION APPARATUS AND FILLING STATION COMPRISING SUCH AN APPARATUS

(30) Priorité: 23.04.2020 FR 2004039
(43) Date de publication de la demande: 27.10.2021
(73) Titulaire: L'Air Liquide, société anonyme pour l'Étude et l'Exploitation des procédés Georges Claude, 75007 Paris (FR)
(72) Inventeur: PETITPAS, Guillaume, 78350 LES LOGES-EN-JOSAS (FR); BENISTAND-HECTOR, Cyril, 38360 SASSENAGE (FR)
(74) Mandataire: Air Liquide

(56) Documents cités:
- EP-A1- 3 409 998
- US-A- 2 730 957
- US-A- 3 070 022
- US-A- 4 156 584

## Description

L'invention concerne un appareil de compression, notamment de fluide cryogénique ainsi qu'une station de remplissage comprenant un tel appareil.

L'invention concerne plus particulièrement un appareil de compression de fluide cryogénique à au moins un étage de compression comprenant au moins un piston et au moins une chemise délimitant au moins une chambre de compression, un arbre mobile en translation selon un axe longitudinal, l'arbre étant relié au(x) piston(s) ou chemise(s) et étant mobile selon un mouvement alternatif dans deux sens opposés et pour assurer des phases de compression et d'admission du fluide dans la au moins une chambre de compression en déplaçant relativement le au moins un piston et la au moins une chemise.

Les fluides cryogéniques présentent des densités beaucoup plus élevées que les fluides gazeux. Par conséquent, les pompes cryogéniques (par opposition aux compresseurs à gaz) offrent des débits massiques plus importants, une empreinte au sol réduite, consomment moins d'énergie et nécessitent moins d'entretien. C'est pourquoi les pompes cryogéniques sont utilisées dans de nombreux domaines tels que les unités de séparation des gaz de l'air, les reformeurs, les stations de remplissage, les secteurs maritimes.

Les fluides concernés comprennent généralement l'oxygène, l'azote, le gaz naturel, l'argon, l'hélium ou l'hydrogène. Ces appareils de compression (ou pompes) ont pour fonction de pressuriser un fluide cryogénique à un débit cible. L'invention concerne en particulier un appareil de compression ou de pompage de gaz et/ou liquides cryogéniques.

Dans la suite, notamment les termes « appareil de compression », « pompe » peuvent être utilisés indistinctement de même que pour les termes « pompage » et « compression ». L'appareil objet de l'invention concerne en effet un appareil de pompage et/ou de compression de fluide cryogénique liquide et/ou gazeux et/ou supercritique.

Par exemple, une pompe à piston cryogénique peut être placée directement en ligne à la sortie du stockage source cryogénique ou encore dans un bain cryogénique dédié (également appelé "sump" en anglais), situé à côté et directement alimenté par un réservoir de stockage principal.

Pour diverses raisons, notamment la commodité de l'entretien et de la conception, généralement la pompe cryogénique est à mouvement alternatif et est insérée dans un réservoir de sorte à être immergée dans le fluide cryogénique à pomper.

Les pompes cryogéniques ont généralement des pressions d'entrée comprises entre 1 et 20 bars et des pressions de sortie de 20 à 1000 bar, selon l'application. Les pompes peuvent comporter un ou plusieurs étages de compression en utilisant un mouvement de va-et-vient.

Les pompes pour des hautes pressions et des débits modérés sont souvent à mouvement alternatif avec deux temps (ou phases) : un temps pour l'aspiration (dans un sens) et un temps pour le refoulement (dans l'autre sens). Des clapets anti-retour (généralement deux par étage de compression : un pour l'entrée ou admission, un pour la sortie ou refoulement) permettent d'élever la pression d'une quantité fixe de fluide en réduisant son volume par la translation relative entre un piston et une chemise.

Les deux courses de translation ont des exigences de conception différentes en ce qui concerne la force et la puissance mécaniques nécessaires au mouvement. La course pour l'admission est généralement à des pressions comprises entre 1 et 20 bars, tandis que la course pour la compression peut aller jusqu'à 1000 bars. Ces deux courses sont donc soumises à des contraintes mécaniques et de pression très différentes.

L'arbre qui relie la tête froide de la pompe cryogénique au mécanisme d'actionnement (moteur ou autre) est donc conçu en termes de matériau et de section pour la contrainte maximale à laquelle il est soumis c'est-à-dire pour la course la plus exigeante (la compression à haute pression dans le cas illustré ici) .

Pour les applications cryogéniques, la quantité de chaleur qui est conduite à travers l'arbre doit être minimisée afin de limiter l'impact thermique sur la chambre de compression principale. Limiter la conduction par l'arbre permet aussi de limiter les entrées thermiques lorsque la pompe est à l'arrêt ou « stand-by » entre la température ambiante et la température cryogénique du gaz liquéfié. Cette réduction de la conduction de l'arbre permet de réduire les entrées thermiques dans le bain de liquide que la pompe soit en fonctionnement ou non donc réduire l'évaporation du gaz liquéfié.

Ainsi, les principales caractéristiques des arbres des pompes cryogéniques à mouvement alternatif sont : capacité à transmettre une grande quantité de force et de puissance du mécanisme d'actionnement à la tête froide et minimiser l'entrée de chaleur dans la tête froide.

Satisfaire à ces deux contraintes est difficile.

Actuellement les arbres de transmission de mouvement sont constitués de longues tiges de métal qui augmente l'encombrement dans la direction axiale, l'usure et la complexité du guidage. Le document US2730957A décrit un appareil de compression ayant un étage de compression comprenant un piston et une chemise délimitant une chambre de compression, un arbre mobile relié au piston selon un mouvement alternatif. L'arbre comprend des tronçons longitudinaux distincts (tubulaires ou non).

Un but de la présente invention est de pallier tout ou partie des inconvénients de l'art antérieur relevés ci-dessus.

A cette fin, l'appareil de compression selon l'invention, par ailleurs conforme à la définition générique qu'en donne le préambule ci-dessus, est essentiellement caractérisé en ce que l'arbre comprend une portion de section réduite selon la direction longitudinale, ladite portion de section réduite séparant deux parties adjacentes de l'arbre, l'arbre comprenant en outre au moins un élément de liaison en matériau ayant une conductivité thermique inférieure à celle du
- matériau constitutif de l'arbre, notamment un matériau composite, ledit au moins un élément de liaison ayant deux extrémités reliées respectivement aux deux parties adjacentes de l'arbre, au niveau de la portion de section réduite, l'arbre a une section réduite de 30 à 85% et de préférence réduite de 65 à 80% par rapport à la section du reste de l'arbre.

L'invention permet ainsi de limiter les entrées thermiques à travers l'arbre d'activation d'une pompe cryogénique.

Par ailleurs, des modes de réalisation de l'invention peuvent comporter l'une ou plusieurs des caractéristiques suivantes :
- le au moins un élément de liaison comprend un câble,
- l'appareil comprend plusieurs câbles disposés autour de la portion de section localement réduite,
- la portion de section réduite est dimensionnée pour transmettre un effort de compression déterminé entre les deux parties adjacentes lorsque l'arbre est déplacé dans une première direction, le au moins un élément de liaison et éventuellement également la portion de section localement réduite, est dimensionnée, respectivement sont dimensionnés, pour transmettre un effort de traction déterminé entre les deux parties adjacentes lorsque l'arbre est déplacé dans une seconde direction opposée à la première direction, l'effort de compression étant inférieure à l'effort de traction,
- l'effort de compression est compris entre 1% et 50% et de préférence entre 2 et 25% de l'effort de traction,
- les deux parties adjacentes de l'arbre sont distinctes,
- l'appareil comporte une couche de matériau isolant thermiquement interposée entre les deux parties adjacentes,
- l'élément de liaison est composé de l'un au moins des matériaux suivants : du Kevlar, des fibres de verre, de l'époxy avec fibres de carbone,
- l'appareil est du type à un seul étage de compression et comprend un carter abritant une unique chambre de compression, un système d'admission communiquant avec la chambre de compression configuré pour permettre l'entrée de fluide à comprimer dans ladite chambre de compression, un piston mobile pour assurer la compression du fluide dans la chambre de compression, l'appareil comprenant en outre un orifice d'évacuation configuré pour permettre la sortie de fluide comprimé de la chambre de compression,
- l'appareil est du type à deux étages de compression et comprend une première chambre de compression, une seconde chambre de compression, un système d'admission communiquant avec la première chambre de compression configuré pour permettre l'entrée de fluide à comprimer dans ladite première chambre de compression, un système de transfert communiquant avec la première et la seconde chambre de compression et configuré pour permettre le transfert de fluide de la première chambre de compression vers la seconde chambre de compression, un piston mobile pour assurer la compression du fluide dans les première et seconde chambres de compression, l'appareil comprenant en outre un orifice d'évacuation communiquant avec la seconde chambre de compression et configuré pour permettre la sortie de fluide comprimé, la seconde chambre de compression étant délimitée par une portion du corps du piston et une paroi fixe de l'appareil, le système d'admission étant situé à une première extrémité de l'appareil, l'orifice d'évacuation étant situé à une seconde extrémité de l'appareil et le système de transfert est situé entre le système d'admission et l'orifice d'évacuation,
- l'appareil est logé dans une enceinte étanche contenant un bain de fluide cryogénique de refroidissement.

L'invention concerne également une station de remplissage de réservoirs de gaz sous pression comprenant une source de gaz liquéfié, notamment d'hydrogène liquéfié, un circuit de soutirage ayant une première extrémité reliée à la source de gaz liquéfié et au moins une seconde extrémité destinée à être raccordée à un réservoir à remplir, le circuit de soutirage comprenant un appareil de pompage ou un appareil de compression de fluide conforme à l'une quelconque des caractéristiques ci-dessus ou ci-dessous.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

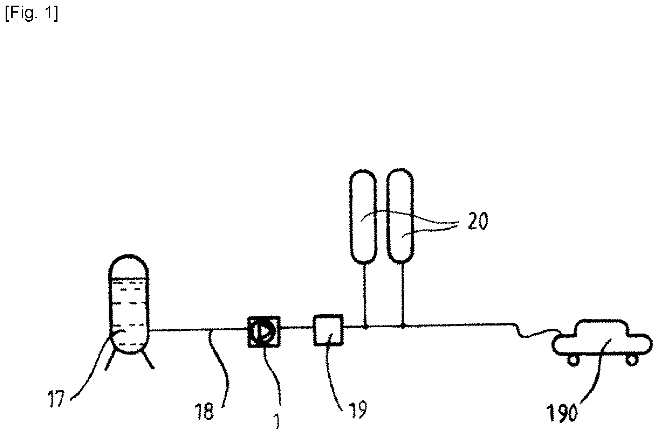

[Fig. 1] représente une vue schématique et partielle, illustrant un exemple de station de remplissage pouvant utiliser un appareil de compression.
[Fig. 2] représente une vue en coupe longitudinale et verticale, schématique et partielle, illustrant la structure d'un premier exemple de réalisation d'un appareil de compression selon l'invention,
[Fig. 3] représente une vue en coupe longitudinale et verticale, schématique et partielle, illustrant la structure d'un deuxième exemple de réalisation d'un appareil de compression selon l'invention,
[Fig. 4] représente une vue en coupe longitudinale et verticale, schématique et partielle, illustrant un détail d'un exemple de structure d'un arbre d'un appareil de compression selon l'invention,

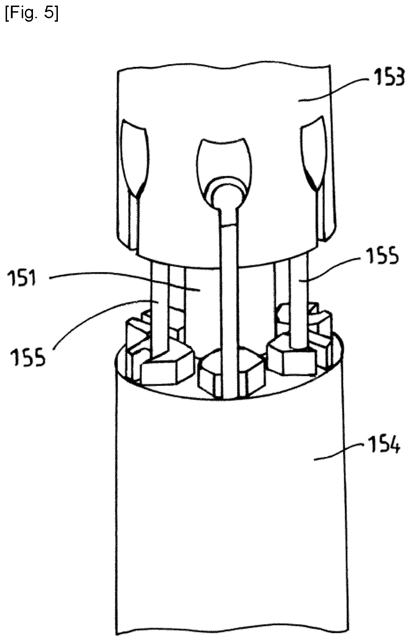

[Fig. 5] représente une vue en perspective du détail de la [Fig. 4] .

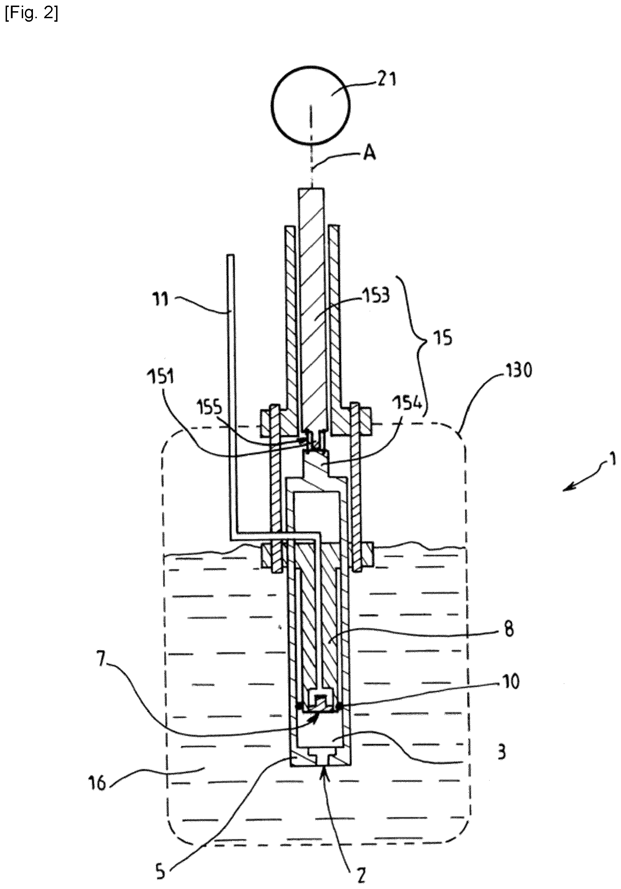

L'invention peut s'appliquer à tout appareil de compression de fluide cryogénique à au moins un étage de compression. Dans l'exemple de la [Fig. 2], l'appareil 1 de compression est du type à un seul étage de compression. L'appareil 1 comprend une unique chambre 3 de compression, un système 2 d'admission communiquant avec la chambre 3 de compression configuré pour permettre l'entrée de fluide à comprimer dans ladite chambre 3 de compression.

Le système 2 d'admission peut comprendre par exemple au moins l'un parmi : un ou plusieurs clapets anti-retour, un ou plusieurs orifices ou lumière(s), au moins un clapet à disque plat ou tout autre dispositif ou vanne permettant l'entrée de fluide à comprimer dans la chambre 3 de compression lors d'une phase d'admission et empêchant la sortie de fluide en phase de compression. En particulier, ce système 2 d'admission s'ouvre en cas de différentiel de pression déterminé entre ses deux extrémités. De plus, la chambre 3 de compression peut éventuellement être équipée d'une soupape ou autre élément de sécurité configuré pour limiter la pression au sein de la chambre en dessous d'un seuil de sécurité déterminé.

La chambre 3 de compression est délimitée par une portion du corps du piston 5 et une paroi fixe de l'appareil. Le piston 5 est mobile en translation selon une direction A longitudinale.

Le piston 5 peut comporter, à une première extrémité, une portion tubulaire montée autour d'un guide 8 central fixe.

Comme illustré, la chambre 3 de compression peut être formée dans une cavité tubulaire ou chambre fixe dans le piston 5 et qui est close à cette première extrémité. La chambre 3 de compression peut être délimitée ainsi en partie inférieure par une extrémité inférieure tubulaire close du piston 5. Le système 2 d'admission peut être situé à une extrémité avant du piston 5.

L'extrémité arrière du piston 5 peut être montée coulissante par rapport à un plateau transversal fixe maintenu par des montant longitudinaux. La structure du piston 5 est conformée pour permettre dans ce cas le coulissement d'une partie (la partie arrière) du piston 5 dans ledit plateau (ou autre(s) support(s)).

Par exemple, la portion inférieure du piston 5 est tubulaire (et forme la chambre 3 de compression) tandis que la partie opposée (supérieure) du piston 5 est conformée pour permettre le coulissement par rapport au plateau support. Par exemple, la partie supérieure du piston 5 comporte une ou des ouvertures permettant le passage du plateau ou support. Le piston 5 peut être réalisé en une ou plusieurs pièces assemblées/solidarisées.

Une première extrémité terminale du guide 8 central peut former la paroi fixe délimitant une seconde extrémité de la chambre 3 de compression. Le reste de la chambre 3 de compression est délimité par un système d'étanchéité 10 (segments ou autre) formé entre le guide 8 central et le piston 5.

C'est-à-dire que la portion tubulaire du piston 5 forme une enceinte entourant toute la chambre 3 de compression. Ainsi la chambre 4 de compression peut être contenue entièrement dans la portion tubulaire du piston 5. Ainsi le piston 5 peut constituer le carter de la chambre 3 de compression. Cette architecture permet de confiner la chambre 3 de compression dans le piston 5 dont les parois peuvent être thermalisées (c'est-à-dire maintenues en froid) efficacement comme décrit ci-après.

L'appareil 1 comprenant en outre un orifice 7 d'évacuation configuré pour permettre la sortie de fluide comprimé de la chambre 3 de compression.

L'orifice 7 d'évacuation peut être pourvu d'un système anti-retour qui peut être du même type que celui du système 2 d'admission (par exemple fermé tant que le différentiel de pression entre la chambre 3 de compression et l'extérieur est inférieur à un seuil déterminé).

Le piston 5 est solidaire d'un arbre 15, par exemple métallique, qui mobile en translation selon un axe A longitudinal.

L'arbre 15 et donc le piston 5 sont mobiles selon un mouvement alternatif dans deux sens opposés et pour assurer des phases de compression (dans cet exemple avec un effort de traction de l'arbre 15) et d'admission du fluide (effort de compression de l'arbre 15) dans la chambre 3.

Selon une particularité avantageuse, l'arbre 15 comprend une portion 151 de section localement réduite située longitudinalement entre deux parties 153, 154 adjacentes de l'arbre 15 et au moins un élément 155 de liaison en matériau moins conducteur thermique ayant deux extrémités reliées respectivement aux deux parties 153, 154 adjacentes de l'arbre 15.

La portion 151 de section réduite peut notamment être dimensionnée pour transmettre un effort de compression déterminé entre deux parties 153, 154 adjacentes lorsque l'arbre 15 est déplacé dans une première direction tandis que le au moins un élément 155 de liaison (et éventuellement également la portion 151 de section localement réduite) est lui dimensionné (respectivement sont dimensionnés), pour transmettre un effort de traction déterminé entre deux parties 153, 154 adjacentes lorsque l'arbre 15 est déplacé dans une seconde direction opposée à la première direction. L'effort de compression peut être significativement inférieure à l'effort de traction.

De préférence, la section transversale de l'arbre 15 est réduite jusqu'à une valeur égale ou supérieure à la valeur minimale à laquelle la contrainte que l'arbre 15 doit endurer ne dépasse pas la contrainte maximale admissible du matériau le constituant.

Ceci permet de sous-dimensionner au moins localement la section de l'arbre 15 pour réduire la conduction de chaleur selon la direction axiale. En effet, cette section réduite et la structure de l'élément 155 de liaison permettent de diminuer la conduction de chaleur entre les parties relativement froides et chaude de l'appareil 1.

Les caractéristiques mécaniques de l'arbre 15 ne sont pas altérées par cette réduction de section grâce au(x) élément(s) 155 de liaison qui viennent assumer au moins en partie les efforts de traction plus importants lors de la phase de compression (traction de l'arbre). La structure par exemple composite du ou des éléments 155 de liaison favorise également la moindre transmission de chaleur le long de l'arbre 15. Par exemple, le au moins un élément 155 de liaison peut être composé de l'un au moins des matériaux suivants : du Kevlar, des fibres de verre, de l'époxy avec fibres de carbone ou tout autre matériau adapté à supporter des efforts de traction et une conductivité thermique inférieure à celle du métal ou alliage habituellement utilisé pour composer l'arbre.

Les parties supérieure et inférieure de l'arbre 15 peuvent ainsi être reliées par des câbles 155, fils, tresses composites et simplement en contact à travers la jonction des câbles 155 et leurs parties métalliques. Ceci crée une isolation thermique supplémentaire.

Ces matériaux présentent l'avantage d'avoir une résistance à la rupture bien plus importante et une conductivité thermique plus faible que les métaux. Ces matériaux composites sont très résistants en traction et moins résistants en compression. Cependant, selon l'arrangement de l'invention, ces éléments de liaisons sont sollicités essentiellement ou exclusivement lors de la traction. En phase de sollicitation en compression de l'arbre, c'est la portion 151 de section localement réduite qui prend tout ou la majorité des efforts ou contraintes. En effet, la structure en tiges ou câbles 155 ne permet pas de solliciter en compression ces derniers (par exemple via un jeu dimensionnel ou une relative flexibilité des câbles 155). D'ailleurs, il peut être envisagé (bien que ce mode de réalisation ne soit pas préféré) que, en traction, les deux parties 153, 154 adjacentes de l'arbre 15 s'écartent lors de la traction et viennent en butée lors de la compression.

Par exemple, pendant le mouvement de compression de l'arbre (par exemple vers le haut lorsque l'appareil est orienté verticalement), l'arbre 15 est tiré vers le haut par la partie 153 supérieure reliée à un moteur 21. Les éléments 155 de liaison sont tirés en traction et transfèrent ainsi la force à la partie 154 inférieure. Dans la course descendante, lorsque seule une fraction de la force ascendante est nécessaire, la partie supérieure 153 descend et pousse la partie 154 inférieure. La surface de contact réduite est suffisante pour transférer l'effort de compression vers le bas.

Au niveau de la portion 151 de section réduite, l'arbre 15 peut avoir une section réduite de 30 à 85% et de préférence réduite de 65 à 80% par rapport à la section du reste de l'arbre 15. C'est-à-dire que, par rapport aux dimensions habituelles de l'arbre 15 dans des réalisations de l'art antérieur, l'invention permet une réduction locale des dimensions significatives qui diminue la conduction thermique mais ne remet pas en cause les exigences de tenue mécanique pour le passage des efforts, notamment en traction.

La portion 151 de section réduite peut être formée sur une faible longueur, par exemple jusqu'à 5% de la longueur de l'arbre 15. Par exemple, cette réduction de section est adaptée à un effort lors de l'admission qui peut être compris entre 1% et 50% et de préférence entre 2 et 25% de l'effort de traction.

Le au moins un élément 155 de liaison peut comprendre plusieurs câble 155 ou tiges ayant deux extrémités rendues solidaires respectivement des deux parties 153, 154 adjacentes de l'arbre 15 (par exemple respectivement supérieure et inférieure). Comme illustré, les câbles 155 peuvent être répartis autour de la portion 151 de section localement réduite.

Les deux parties 153, 154 adjacentes de l'arbre 15 situées de part et d'autre de la portion 151 de section réduite peuvent être monobloc ou être des pièces distinctes (de même composition ou de compositions différentes).

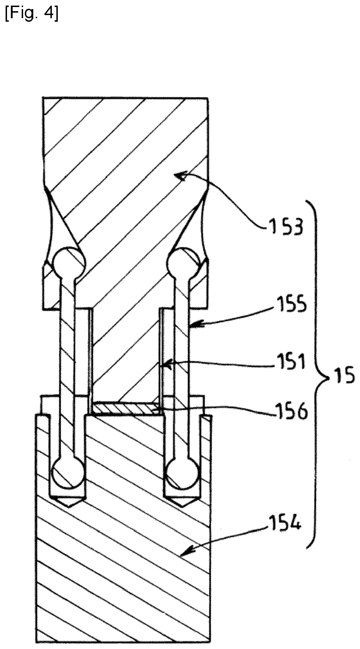

Comme illustré à la [Fig. 4], au moins une couche 156 de matériau isolant thermiquement peut être interposée entre les deux parties 153, 154, adjacentes, par exemple au niveau de la portion 151 de section localement réduite. Cette couche peut comprendre par exemple : de la fibre de verre, de l'acier dur ou chromé, des polymères type PTFE...

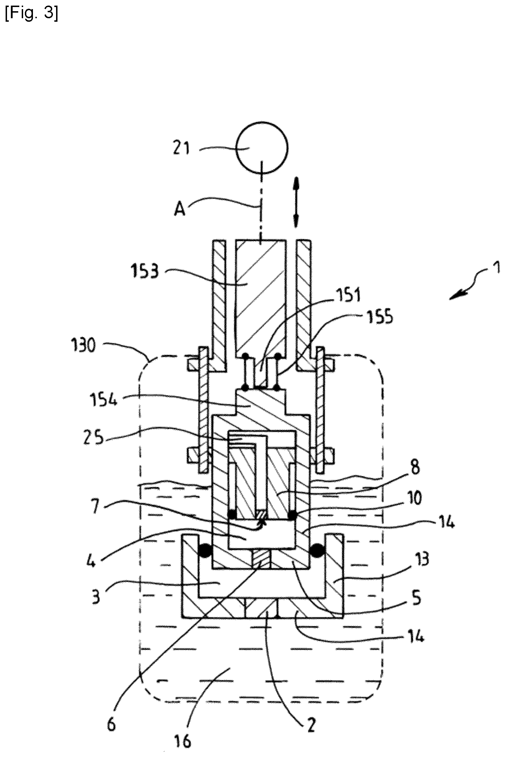

Comme illustré à la [Fig. 3], cette particularité peut s'appliquer également à un appareil de compression à deux étages de compression.

Cet exemple non limitatif d'appareil 1 de compression comprend une première chambre 3 de compression, une seconde chambre 4 de compression, un système 2 d'admission communiquant avec la première chambre 3 de compression configuré pour permettre l'entrée de fluide à comprimer dans ladite première chambre 3 de compression (cf. ci-dessus pour les réalisations possibles de ce système 2 d'admission). L'appareil 1 comprend en outre un système 6 de transfert communiquant avec la première 3 et la seconde 4 chambre de compression et configuré pour permettre le transfert de fluide de la première chambre 3 de compression vers la seconde 4 chambre de compression (le système de transfert 6 peut être du même type que celui du système d'admission discuté précédemment).

L'appareil comprend en outre un piston 5 mobile pour assurer la compression du fluide dans les première 3 et seconde 4 chambres de compression. L'appareil 1 comprend en outre un orifice 7 d'évacuation communiquant avec la seconde chambre 4 de compression et configuré pour permettre la sortie de fluide comprimé. Ce système d'évacuation peut comporter un système de clapet(s) du même type que celui décrit ci-dessus).

Comme illustré, la seconde 4 chambre de compression peut être délimitée par une portion du corps du piston 5 et une paroi fixe de l'appareil. De plus, le piston 5 peut comporter une portion tubulaire montée autour d'un guide 8 central fixe. Une extrémité terminale du guide 8 central peut former la paroi fixe délimitant une partie de la seconde chambre 4 de compression. L'appareil 1 comprend un système d'étanchéité 10 formé entre le guide 8 central et le piston 5. Le système 2 d'admission est situé à une première extrémité de l'appareil 1, l'orifice 7 d'évacuation étant situé à une seconde extrémité de l'appareil opposée et le système 6 de transfert est situé de préférence entre le système 2 d'admission et l'orifice 7 d'évacuation.

Plus généralement, l'invention peut s'appliquer à tout appareil de compression comprenant un arbre 15 entraîné par un organe 21 moteur et relié à un mécanisme de compression (piston/chemise) d'un fluide, notamment cryogénique.

Comme illustré, le système de compression est de préférence l'appareil 1 de compression peut être logé dans une enceinte 13 étanche isolée thermiquement et contenant une bain 16 de fluide cryogénique de refroidissement.

En particulier, la ou les chambres 3, 4 de compression peuvent être immergées dans une phase liquide. La partie supérieure de l'enceinte 16 peut comporter un ciel gazeux qui récupère les éventuelles fuites dans l'appareil 1.

Ainsi, la tête froide de l'appareil 1 peut être immergée verticalement dans une bain cryogénique (parfois appelé puisard, ou « sump » en anglais).

Dans le cas de deux étages de compression, le premier étage de compression recueille le fluide à basse pression puis le déplace par compression vers le deuxième étage de compression selon dans l'axe longitudinal A. Le fluide haute pression sort ensuite du deuxième étage de compression vers le haut (lorsque l'axe A n'est pas horizontal) .

Ainsi, l'invention permet d'utiliser un arbre 15 ou une tige métallique possédant une barrière thermique améliorée. Un matériau composite ou équivalent est utilisé préférentiellement en traction pendant la course à haute pression mais la section métallique est utilisée en compression.

La section transversale de l'arbre peut être dimensionnée pour la transmission de force/puissance nécessaire pendant la course d'admission, donc beaucoup plus faible que si elle était dimensionnée pour les efforts de la course de compression du fluide.

Ceci permet de diminuer la longueur de l'arbre 15 par rapport à l'art antérieur tout en améliorant les performances thermiques lorsque l'arbre 15 est soumis à un grand gradient thermique.

Un appareil 1 de compression de ce type (ou plusieurs en série ou en parallèle) peut être utilisé dans toute installation cryogénique nécessitant de pomper ou comprimer un fluide cryogénique.

Par exemple, une station de remplissage de réservoirs de gaz sous pression (hydrogène par exemple) peut comprendre une source 17 de gaz liquéfié, un circuit 18 de soutirage ayant une première extrémité reliée à la source et au moins une seconde extrémité destinée à être raccordée à un réservoir 190 à remplir, le circuit 18 de soutirage comprenant un tel appareil 1 de pompage. Le fluide pompé peut être vaporisé dans un échangeur 19 en aval et éventuellement stocké dans un ou plusieurs réservoirs 20 tampon sous pression

## Revendications

1. Appareil (1) de compression de fluide cryogénique à au moins un étage de compression comprenant au moins un piston (5, 8) et au moins une chemise (13, 14) délimitant au moins une chambre (3, 4) de compression, un arbre (15) mobile en translation selon un axe (A) longitudinal, l'arbre (15) étant relié au(x) piston(s) ou chemise(s) et étant mobile selon un mouvement alternatif dans deux sens opposés et pour assurer des phases de compression et d'admission du fluide dans la au moins une chambre (3, 4) de compression en déplaçant relativement le au moins un piston (5) et la au moins une chemise (13, 14), l'arbre (15) comprenant une portion (151) de section réduite selon la direction (A) longitudinale, ladite portion (151) de section réduite séparant deux parties (153, 154) adjacentes de l'arbre (15), l'arbre (15) comprenant en outre au moins un élément (155) de liaison en matériau ayant une conductivité thermique inférieure à celle du matériau constitutif de l'arbre (15), ledit au moins un élément (155) de liaison ayant deux extrémités reliées respectivement aux deux parties (153, 154) adjacentes de l'arbre (15), au niveau de la portion (151) de section réduite, l'arbre (15) ayant une section réduite de 30 à 85% et de préférence réduite de 65 à 80% par rapport à la section du reste de l'arbre (15).

2. Appareil selon la revendication 1, **caractérisé en ce que** le au moins un élément (155) de liaison comprend un câble.

3. Appareil selon la revendication 2, **caractérisé en ce qu'**il comprend plusieurs câbles (155) disposés autour de la portion (151) de section localement réduite.

4. Appareil selon l'une quelconque des revendications 1 à 3, **caractérisé en ce que** la portion (151) de section réduite est dimensionnée pour transmettre un effort de compression déterminé entre les deux parties (153, 154) adjacentes lorsque l'arbre (15) est déplacé dans une première direction et **en ce que** le au moins un élément (155) de liaison et éventuellement également la portion (151) de section localement réduite, est dimensionnée, respectivement sont dimensionnés, pour transmettre un effort de traction déterminé entre les deux parties (153, 154) adjacentes lorsque l'arbre (15) est déplacé dans une seconde direction opposée à la première direction, l'effort de compression étant inférieure à l'effort de traction.

5. Appareil selon la revendication 4, **caractérisé en ce que** l'effort de compression est compris entre 1% et 50% et de préférence entre 2 et 25% de l'effort de traction.

6. Appareil selon l'une quelconque des revendications 1 à 5, **caractérisé en ce que** les deux parties (153, 154) adjacentes de l'arbre (15) sont distinctes.

7. Appareil selon la revendication 6, **caractérisé en ce qu'**il comporte une couche (156) de matériau isolant thermiquement interposée entre les deux parties (153, 154) adjacentes.

8. Appareil selon l'une quelconque des revendications 1 à 7, **caractérisé en ce que** l'élément (155) de liaison est composé de l'un au moins des matériaux suivants : du Kevlar, des fibres de verre, de l'époxy avec fibres de carbone.

9. Appareil selon l'une quelconque des revendications 1 à 8, **caractérisé en ce qu'**il est du type à un seul étage de compression, l'appareil comprenant un carter abritant une unique chambre (3) de compression, un système (2) d'admission communiquant avec la chambre (3) de compression configuré pour permettre l'entrée de fluide à comprimer dans ladite chambre (3) de compression, un piston (5) mobile pour assurer la compression du fluide dans la chambre (3) de compression, l'appareil (1) comprenant en outre un orifice (7) d'évacuation configuré pour permettre la sortie de fluide comprimé de la chambre (3) de compression.

10. Appareil selon l'une quelconque des revendications 1 à 8, **caractérisé en ce qu'**il est du type à deux étages de compression, l'appareil (1) comprenant une première chambre (3) de compression, une seconde chambre (4) de compression, un système (2) d'admission communiquant avec la première chambre (3) de compression configuré pour permettre l'entrée de fluide à comprimer dans ladite première chambre (3) de compression, un système (6) de transfert communiquant avec la première (3) et la seconde (4) chambre de compression et configuré pour permettre le transfert de fluide de la première chambre (3) de compression vers la seconde (4) chambre de compression, un piston (5) mobile pour assurer la compression du fluide dans les première (3) et seconde (4) chambres de compression, l'appareil (1) comprenant en outre un orifice (7) d'évacuation communiquant avec la seconde chambre (4) de compression et configuré pour permettre la sortie de fluide comprimé, la seconde (4) chambre de compression étant délimitée par une portion du corps du piston (5) et une paroi fixe de l'appareil, le système (2) d'admission étant situé à une première extrémité de l'appareil (1), l'orifice (7) d'évacuation étant situé à une seconde extrémité de l'appareil et le système (6) de transfert est situé entre le système (2) d'admission et l'orifice (7) d'évacuation.

11. Appareil selon l'une quelconque des revendications 1 à 9, **caractérisé en ce qu'**il est logé dans une enceinte (16) étanche contenant un bain (13) de fluide cryogénique de refroidissement.

12. Station de remplissage de réservoirs de gaz sous pression comprenant une source (17) de gaz liquéfié, notamment d'hydrogène liquéfié, un circuit (18) de soutirage ayant une première extrémité reliée à la source (17) de gaz liquéfié et au moins une seconde extrémité destinée à être raccordée à un réservoir (19) à remplir, le circuit (18) de soutirage comprenant un appareil (1) de compression de fluide conforme à l'une quelconque des revendications 1 à 11.

## Patentansprüche

1. Vorrichtung (1) zur Kompression von kryogenem Fluid mit mindestens einer Kompressionsstufe, die mindestens einen Kolben (5, 8) und mindestens eine Laufbuchse (13, 14), die mindestens eine Kompressionskammer (3, 4) begrenzen, und eine entlang einer Längsachse (A) translatorisch bewegliche Welle (15) umfasst, wobei die Welle (15) mit dem (den) Kolben oder der (den) Laufbuchse(n) verbunden ist und in zwei entgegengesetzten Richtungen hin und her bewegbar ist, um Phasen der Kompression und des Einlasses des Fluids in die mindestens eine Kompressionskammer (3, 4) sicherzustellen, indem sie den mindestens einen Kolben (5) und die mindestens eine Laufbuchse (13, 14) relativ zueinander verschiebt, wobei die Welle (15) einen Abschnitt (151) mit verringertem Querschnitt in der Längsrichtung (A) umfasst, wobei der Abschnitt (151) mit verringertem Querschnitt zwei benachbarte Teile (153, 154) der Welle (15) trennt, wobei die Welle (15) außerdem mindestens ein Verbindungselement (155) aus einem Material mit einer spezifischen Wärmeleitfähigkeit umfasst, die niedriger als diejenige des Materials ist, aus dem die Welle (15) besteht, wobei das mindestens eine Verbindungselement (155) zwei Enden aufweist, die jeweils mit einem der zwei benachbarten Teile (153, 154) der Welle (15) verbunden sind, wobei an dem Abschnitt (151) mit verringertem Querschnitt die Welle (15) einen Querschnitt aufweist, der gegenüber dem Querschnitt des restlichen Teils der Welle (15) um 30 bis 85 % verringert und vorzugsweise um 65 bis 80 % verringert ist.

2. Vorrichtung nach Anspruch 1, **dadurch gekennzeichnet, dass** das mindestens eine Verbindungselement (155) ein Kabel umfasst.

3. Vorrichtung nach Anspruch 2, **dadurch gekennzeichnet, dass** sie mehrere Kabel (155) umfasst, die um den Abschnitt (151) mit lokal verringertem Querschnitt herum angeordnet sind.

4. Vorrichtung nach einem der Ansprüche 1 bis 3, **dadurch gekennzeichnet, dass** der Abschnitt (151) mit verringertem Querschnitt dafür bemessen ist, eine bestimmte Kompressionskraft zwischen den zwei benachbarten Teilen (153, 154) zu übertragen, wenn die Welle (15) in einer ersten Richtung verschoben wird, und dadurch, dass das mindestens eine Verbindungselement (155) und eventuell auch der Abschnitt (151) mit lokal verringertem Querschnitt dafür bemessen ist bzw. bemessen sind, eine bestimmte Zugkraft zwischen den zwei benachbarten Teilen (153, 154) zu übertragen, wenn die Welle (15) in einer zur ersten Richtung entgegengesetzten zweiten Richtung verschoben wird, wobei die Kompressionskraft kleiner als die Zugkraft ist.

5. Vorrichtung nach Anspruch 4, **dadurch gekennzeichnet, dass** die Kompressionskraft zwischen 1 % und 50 % und vorzugsweise zwischen 2 % und 25 % der Zugkraft beträgt.

6. Vorrichtung nach einem der Ansprüche 1 bis 5, **dadurch gekennzeichnet, dass** die zwei benachbarten Teile (153, 154) der Welle (15) unterschiedlich sind.

7. Vorrichtung nach Anspruch 6, **dadurch gekennzeichnet, dass** sie eine Schicht (156) aus thermisch isolierendem Material aufweist, die zwischen den zwei benachbarten Teilen (153, 154) angeordnet ist.

8. Vorrichtung nach einem der Ansprüche 1 bis 7, **dadurch gekennzeichnet, dass** das Verbindungselement (155) aus mindestens einem der folgenden Materialien besteht: aus Kevlar, aus Glasfasern, aus Epoxidharz mit Kohlenstofffasern.

9. Vorrichtung nach einem der Ansprüche 1 bis 8, **dadurch gekennzeichnet, dass** sie vom Typ mit nur einer Kompressionsstufe ist, wobei die Vorrichtung ein Gehäuse, in dem eine einzige Kompressionskammer (3) angeordnet ist, ein mit der Kompressionskammer (3) in Verbindung stehendes Einlasssystem (2), das dafür ausgelegt ist, den Eintritt von zu komprimierendem Fluid in die Kompressionskammer (3) zu ermöglichen, und einen beweglichen Kolben (5), um die Kompression des Fluids in der Kompressionskammer (3) sicherzustellen, umfasst, wobei die Vorrichtung (1) außerdem eine Auslassöffnung (7) umfasst, die dafür ausgelegt ist, den Austritt von komprimiertem Fluid aus der Kompressionskammer (3) zu ermöglichen.

10. Vorrichtung nach einem der Ansprüche 1 bis 8, **dadurch gekennzeichnet, dass** sie vom Typ mit zwei Kompressionsstufen ist, wobei die Vorrichtung (1) eine erste Kompressionskammer (3), eine zweite Kompressionskammer (4), ein mit der ersten Kompressionskammer (3) in Verbindung stehendes Einlasssystem (2), das dafür ausgelegt ist, den Eintritt von zu komprimierendem Fluid in die erste Kompressionskammer (3) zu ermöglichen, ein Übertragungssystem (6), das mit der ersten (3) und der zweiten (4) Kompressionskammer in Verbindung steht und dafür ausgelegt ist, die Übertragung von Fluid von der ersten Kompressionskammer (3) zur zweiten Kompressionskammer (4) zu ermöglichen, und einen beweglichen Kolben (5), um die Kompression des Fluids in der ersten (3) und der zweiten (4) Kompressionskammer sicherzustellen, umfasst, wobei die Vorrichtung (1) außerdem eine Auslassöffnung (7) umfasst, die mit der zweiten Kompressionskammer (4) in Verbindung steht und dafür ausgelegt ist, den Austritt von komprimiertem Fluid zu ermöglichen, wobei die zweite Kompressionskammer (4) von einem Abschnitt des Körpers des Kolbens (5) und einer ortsfesten Wand der Vorrichtung begrenzt wird, wobei sich das Einlasssystem (2) an einem ersten Ende der Vorrichtung (1) befindet, wobei sich die Auslassöffnung (7) an einem zweiten Ende der Vorrichtung befindet und das Übertragungssystem (6) sich zwischen dem Einlasssystem (2) und der Auslassöffnung (7) befindet.

11. Vorrichtung nach einem der Ansprüche 1 bis 9, **dadurch gekennzeichnet, dass** sie in einem dichten Behälter (16) aufgenommen ist, der ein Bad (13) von kryogenem Kühlfluid enthält.

12. Füllstation für Druckgastanks, welche eine Quelle (17) von Flüssiggas, insbesondere von flüssigem Wasserstoff, und eine Entnahmeleitung (18) mit einem ersten Ende, das mit der Quelle (17) von Flüssiggas verbunden ist, und mindestens einem zweiten Ende, das dazu bestimmt ist, an einen zu füllenden Tank (19) angeschlossen zu werden, umfasst, wobei die Entnahmeleitung (18) eine Vorrichtung (1) zur Kompression von Fluid gemäß einem der Ansprüche 1 bis 11 umfasst.

## Claims

1. Apparatus (1) for compressing cryogenic fluid in at least one compression stage comprising at least one piston (5, 8) and at least one sleeve (13, 14) delimiting at least one compression chamber (3, 4), a shaft (15) that is able to move in translation along a longitudinal axis (A), the shaft (15) being connected to the piston(s) or sleeve(s) and being able to move with an alternating movement in two opposite directions to ensure phases of compression and intake of fluid into the at least one compression chamber (3, 4) by moving the at least one piston (5) and the at least one sleeve (13, 14) in a relative manner, the shaft (15) comprising a portion (151) of reduced cross section in the longitudinal direction (A), said portion (151) of reduced cross section separating two adjacent parts (153, 154) of the shaft (15), the shaft (15) also comprising at least one linking element (155) made of material that is less thermally conductive than the constituent material of the shaft (15), said at least one linking element (155) having two ends connected respectively to the two adjacent parts (153, 154) of the shaft (15), in the portion (151) of reduced cross section, the shaft (15) having a cross section reduced by 30 to 85% and preferably reduced by 65 to 80% compared with the cross section of the rest of the shaft (15).

2. Apparatus according to Claim 1, **characterized in that** the at least one linking element (155) comprises a cable.

3. Apparatus according to Claim 2, **characterized in that** it comprises a plurality of cables (155) disposed around the portion (151) of locally reduced cross section.

4. Apparatus according to any one of Claims 1 to 3, **characterized in that** the portion (151) of reduced cross section is dimensioned so as to transmit a given compressive load between the two adjacent parts (153, 154) when the shaft (15) is moved in a first direction, and **in that** the at least one linking element (155) and possibly also the portion (151) of locally reduced cross section is dimensioned, or are dimensioned, so as to transmit a given tensile load between the two adjacent parts (153, 154) when the shaft (15) is moved in a second direction opposite to the first direction, the compressive load being less than the tensile load.

5. Apparatus according to Claim 4, **characterized in that** the compressive load is between 1% and 50% and preferably between 2 and 25% of the tensile load.

6. Apparatus according to any one of Claims 1 to 5, **characterized in that** the two adjacent parts (153, 154) of the shaft (15) are separate from one another.

7. Apparatus according to Claim 6, **characterized in that** it has a layer (156) of thermally insulating material interposed between the two adjacent parts (153, 154) .

8. Apparatus according to any one of Claims 1 to 7, **characterized in that** the linking element (155) is made from at least one of the following materials: Kevlar, glass fibres, epoxy with carbon fibres.

9. Apparatus according to any one of Claims 1 to 8, **characterized in that** it is of the single compression stage type, the apparatus comprising a casing accommodating a single compression chamber (3), an intake system (2) that communicates with the compression chamber (3) and is configured to allow the inlet of fluid to be compressed into said compression chamber (3), a movable piston (5) for ensuring the compression of the fluid in the compression chamber (3), the apparatus (1) also comprising a discharge orifice (7) configured to allow the outlet of compressed fluid from the compression chamber (3).

10. Apparatus according to any one of Claims 1 to 8, **characterized in that** it is of the two compression stage type, the apparatus (1) comprising a first compression chamber (3), a second compression chamber (4), an intake system (2) that communicates with the first compression chamber (3) and is configured to allow the inlet of fluid to be compressed into said first compression chamber (3), a transfer system (6) that communicates with the first (3) and the second (4) compression chamber and is configured to allow the transfer of fluid from the first compression chamber (3) to the second compression chamber (4), a movable piston (5) for ensuring the compression of the fluid in the first (3) and second (4) compression chambers, the apparatus (1) also comprising a discharge orifice (7) that communicates with the second compression chamber (4) and is configured to allow the outlet of compressed fluid, the second compression chamber (4) being delimited by a portion of the body of the piston (5) and a fixed wall of the apparatus, the intake system (2) being situated at a first end of the apparatus (1), the discharge orifice (7) being situated at a second end of the apparatus and the transfer system (6) being situated between the intake system (2) and the discharge orifice (7).

11. Apparatus according to any one of Claims 1 to 9, **characterized in that** it is housed in a sealed enclosure (16) containing a bath (13) of cryogenic cooling fluid.

12. Station for filling tanks of pressurized gas comprising a source (17) of liquefied gas, in particular liquefied hydrogen, a withdrawal circuit (18) having a first end connected to the source (17) of liquefied gas and at least one second end intended to be connected to a tank (19) to be filled, the withdrawal circuit (18) comprising an apparatus (1) for compressing fluid according to any one of Claims 1 to 11.
